# EUROPEAN PATENT SPECIFICATION

(11) **EP 0 515 384 B1**
(45) Date of publication and mention of the grant of the patent: **27.07.1994**
(21) Application number: 91901795.4
(22) Date of filing: 15.01.1991
(51) Int. Cl.: F28F 9/00, F24D 19/06

(54) **A SINGLE-PLATE WATER HEATING RADIATOR**
EINZELPLATTENWASSERHEIZRADIATOR
RADIATEUR A EAU CHAUDE A UN SEUL PLATEAU

(30) Priority: 14.02.1990 FI 900742
(43) Date of publication of application: 02.12.1992
(73) Proprietor: OY RETTIG LÄMPÖ, 00120 Helsinki (FI)
(72) Inventor: RANTA, Markku, SF-66900 Uusikaarlepyy (FI); TARVAINEN, Pekka, SF-68660 Pietarsaari (FI); AKERMAN, Urban, SF-67100 Kokkola (FI)
(74) Representative: Skone James, Robert Edmund
(86) International application number: FI9100016
(87) International publication number: WO9112478

(56) References cited:
- EP-A- 0 386 496
- DE-A- 2 903 124
- FR-A- 2 262 272

## Description

The invention relates to a single-plate water heating radiator.

Today it is customary to provide the ends of water heating radiators with end plates. With single-plate heating radiators, however, such end plates are difficult to fix; in prior art structures, the end plate is fixed e.g. by means of screws to the convection plate, or by means of separate fasteners which are attached at a suitable point in the radiator. For this reason, the provision of end plates in radiators is unreasonably time-consuming and rises costs. In most cases, the end result is nevertheless less satisfactory as far as the appearance or the detachment and re-attachment are concerned.

DE-A-2903124 describes a radiator casing which is provided with a lower engaging flange which engages one of a pair of radiating bodies and an upper flange extending over both radiating bodies.

The object of the present invention is to eliminate the problems described above.

In accordance with the present invention, a single-plate water heating radiator comprises a radiator body with a finned convection plate and end plates, the end plates being attached to the radiator with a snap coupling and gripping the end of the radiator body and one fin of the convection plate in a pincerlike manner; characterized in that the edge of a section of the end plates bearing on the fin of the convection plate forms a bend which - when the radiator is viewed from the side of said end plate - extends behind the first fin of the convection plate, and that tongues project from the section in such a manner that they - as viewed in the above mentioned direction - are pressed against the front side of the first fin of the convection plate, whereby the other edge of the end plate bears on the end of the radiator body by means of another bend and whereby the first bend and the tongues together with the fin form a snap coupling when the section of the end plate is pushed on the fin and strained.

The invention is based on the idea of locking the end plate to the radiator by means of the shape of these parts without any separate fastening means by utilizing the flexibility of the end plate and to some extent also that of the convection plate. In this way, the "fastening means" can be formed easily in the end plate at the manufacturing stage. The end plate can be attached to the radiator and detached from it in a moment. In addition, the attachment is reliable and outwardly invisible.

In the following the invention will be described in greater detail by means of a preferred embodiment with reference to the attached drawing, in which
Figure 1 is a perspective diagonal back view of a water heating radiator of the invention;
Figure 2 is a top view of one corner of the radiator of Figure 1; and
Figure 3 is a perspective view of the end plate of Figures 1 and 2 when detached.

The water heating radiator shown in the drawing comprises a radiator body 1; a convection plate 2 to the back surface of which fins 3 are attached; end plates 4 at the ends of the radiator; and a conventional protective grating 5 positioned upon the radiator between the end plates 4. The end plate 4 is attached to the radiator with a snap coupling so that it grips the end of the radiator body 1 and one fin 3 of the convection plate 2 in a pincerlike manner.

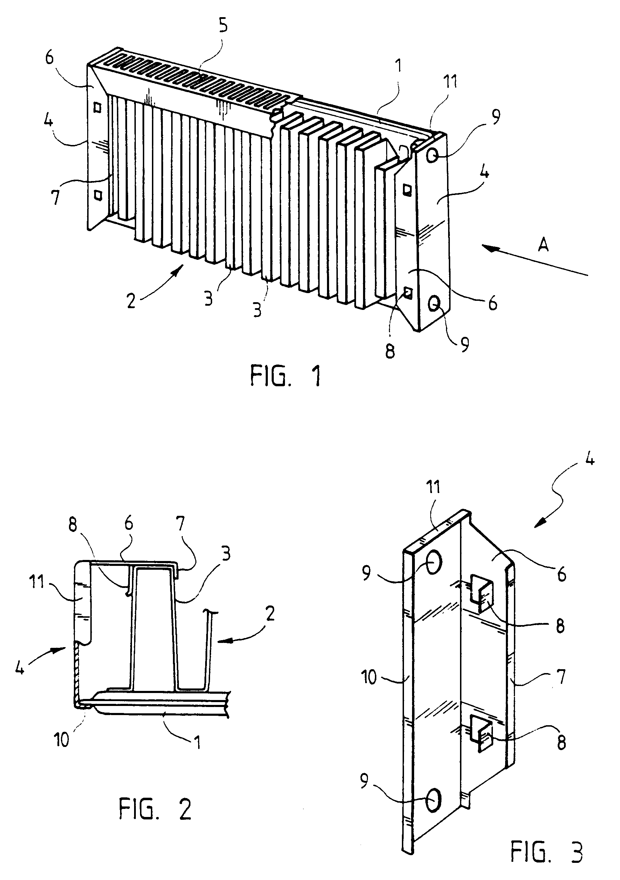

The snap coupling appears from Figure 2 in particular and the structure of the convection plate enabling the snap coupling appears from Figure 3. In this specific case, the edge of a section 6 of the end plate 4 bearing on the fin 3 of the convection plate 2 forms a bend 7 which - when the radiator is viewed in the direction A of Figure 1 - extends behind the first fin 3 of the convection plate 2. Tongues 8 project from the section 6 in such a manner that they - as viewed in the above-mentioned direction - are pressed against the front side of the first fin 3 of the convection plate 2. As the other edge of the end plate 4 bears on the end of the radiator body 1 by means of another bend 10, the bend 6 and the tongues 8 together with the fin 3 form a snap coupling when the section 6 of the end plate 4 is pushed on the fin 3 and strained.

The upper edges of the two end plates 4 further comprise bends 11 which keep the protective grating 5 in position between the end plates 4. Holes 9 in the end plate 4 are intended for the water connections of the radiator.

The drawings and the description related to it only describe one preferred embodiment of the invention. The snap coupling at the fin of the convection plate can be realized in various other ways, such as by means of a longitudinal groove or recesses formed in the fin and projections formed in the end plate and extending into the groove or recesses.

## Claims

1. A single-plate water heating radiator comprising a radiator body (1) with a finned convection plate (2) and end plates (4), the end plates (4) being attached to the radiator with a snap coupling and gripping the end of the radiator body (1) and one fin (3) of the convection plate (2) in a pincerlike manner; characterized in that the edge of a section (6) of the end plates bearing on the fin (3) of the convection plate (2) forms a bend (7) which - when the radiator is viewed from the side of said end plate - extends behind the first fin (3) of the convection plate (2), and that tongues (8) project from the section (6) in such a manner that they - as viewed in the above mentioned direction - are pressed against the front side of the first fin (3) of the convection plate (2), whereby the other edge of the end plate (4) bears on the end of the radiator body (1) by means of another bend (10) and whereby the first bend (6) and the tongues (8) together with the fin (3) form a snap coupling when the section (6) of the end plate is pushed on the fin (3) and strained.

2. A heating radiator according to claim 1, characterized in that the end plates (4) bear on the outermost fin (3) of the convection plate (2).

## Patentansprüche

1. Einplatten-Warmwasserheizung, bestehend aus einem Heizungskörper (1) mit einer rippenförmigen Konvektionsplatte (2) und Seitenblenden (4), wobei die Endplatten (4) mit einer Schnappverbindung zangenartig am Heizungskörper (1) und einer Rippe (3) der Konvektionsplatte (4) befestigt werden; **dadurch gekennzeichnet**, daß die Kante eines Teils (6) der Seitenblenden, die im direkten Kontakt mit der Rippe (3) der Konvektionsplatte (2) steht, eine Biegung (7) aufweist, welche - bei Betrachtung des Heizungskörpers von der Seite der besagten Seitenblende aus gesehen - um die erste Rippe (3) der Konvektionsplatte (2) herumgreift, und daß im Teil (6) Zungen (8) so ausgestanzt sind, daß sie - gesehen aus der gleichen Blickrichtung - gegen die Stirnseite der ersten Rippe (3) der Konvektionsplatte (2) gedrückt werden, während die andere Kante der Seitenblende (4) mit der weiteren Biegung (10) um die Kante des Heizungskörpers (1) herumgreift, wobei die erste Biegung (7) und die Zungen (8) zusammen mit der Rippe (3) eine Schnappverbindung bilden, wenn der Teil (6) der Seitenblende auf die Rippe (3) geschoben und verspannt wird.

2. Heizungskörper nach Anspruch 1, **dadurch gekennzeichnet**, daß die Seitenblenden (4) an der äußersten Rippe (3) der Konvektionsplatte (2) angebracht werden.

## Revendications

1. Radiateur de chauffage à eau à un seul plateau comportant un corps (1) de radiateur muni d'une plaque (2) de convection à ailettes et des plaques d'extrémité (4), les plaques d'extrémité (4) étant fixées au radiateur à l'aide d'un accouplement par encliquetage et saisissant l'extrémité du corps (1) de radiateur et une ailette (3) de la plaque de convection (2) à la manière d'une tenaille, caractérisé en ce que le bord du tronçon (6) des plaques d'extrémité en appui sur l'ailette (3) de la plaque de convection (2) forme un rebord (7) qui, lorsque le radiateur est vu à partir du côté de ladite plaque d'extrémité, s'étend derrière la première ailette (3) de la plaque de convection (2), et en ce que des pattes (8) font saillie à partir du tronçon (6) de manière telle que, lorsqu'elles sont vue dans la direction mentionnée ci-dessus, elles sont en appui contre le côté avant de la première ailette (3) de la plaque de convection (2), de sorte que l'autre bord de la plaque d'extrémité (4) soit en appui sur l'extrémité du corps (1) de radiateur par l'intermédiaire d'un autre rebord (10) et de sorte que le premier rebord (6) et les pattes (8) associées à l'ailette (3) forment un accouplement par encliquetage lorsque le tronçon (6) de la plaque d'extrémité est poussé sur l'ailette (3) et est contraint.

2. Radiateur de chauffage selon la revendication 1, caractérisé en ce que les plaques d'extrémité (4) sont en appui sur l'ailette (3) la plus extérieure de la plaque (2) de convection.
